# EUROPÄISCHE PATENTANMELDUNG

(11) **EP 0 685 956 A2**
(43) Veröffentlichungstag der Anmeldung: **06.12.1995**
(21) Anmeldenummer: 95890100.1
(22) Anmeldetag: 31.05.1995
(51) Int. Cl.: H04M 3/42, H04M 3/50

(54) **Fernsprechvermittlungsanlage mit Sprachspeichereinrichtung**

(30) Priorität: 01.06.1994 AT 1119/94
(71) Anmelder: Alcatel Austria Aktiengesellschaft, A-1210 Wien (AT)
(72) Erfinder: Hegedüs, Arpad, A-1150 Wien (AT)
(74) Vertreter: Pohl, Herbert, Dipl.-Ing

(57) **Zusammenfassung**

Fernsprechvermittlungsanlage (1) mit einer Sprachspeichereinrichtung (7), die bei Nichtabheben des gerufenen Teilnehmers (3) nach einer vorgegebenen Zeit mit dem rufenden Teilnehmer (2) verbunden wird, sowie Verfahren zur Abspeicherung von Sprachnachrichten in einer solchen Vermittlungsanlage, wobei die Sprachspeichereinrichtung imstande ist, vom rufenden Teilnehmer eintreffende und für den gerufenen Teilnehmer bestimmte Sprachnachrichten zu speichern und nach Aufforderung durch den gerufenen Teilnehmer an diesen abzusenden. Die Vermittlungsanlage enthält Schaltmittel, die nach einer einmal erfolgten zeitabhängigen Umschaltung des gerufenen Teilnehmers auf die Sprachspeichereinrichtung auch alle weiteren Anrufe für den gerufenen Teilnehmer mit der Sprachspeichereinrichtung verbinden. Die Vermittlungseinrichtung erkennt also, daß der gerufene Teilnehmer nicht sprechbereit ist und schaltet alle weiteren ankommenden Rufe zur Sprachspeichereinrichtung.

## Beschreibung

Die Erfindung betrifft eine Fernsprechvermittlungsanlage mit einer Sprachspeichereinrichtung, die bei einem Rufvorgang durch den rufenden Teilnehmer und bei Nichtabheben des gerufenen Teilnehmers nach einer vorgegebenen Zeit mit dem rufenden Teilnehmer verbunden wird. Die Fernsprechvermittlungsanlage wird von einer Steuereinrichtung gesteuert, die Steuerprozesse zur Rufumleitung sowie zur Ansteuerung der gewünschten Mailbox in der Sprachspeichereinrichtung enthält. Die Sprachspeichereinrichtung ist imstande, vom rufenden Teilnehmer eintreffende und für den gerufenen Teilnehmer bestimmte Sprachnachrichten zu speichern und nach Aufforderung durch den gerufenen Teilnehmer an diesen abzusenden. Die Erfindung betrifft auch ein Verfahren zur Abspeicherung von Sprachnachrichten in der oben beschriebenen Fernsprechvermittlungsanlage.

Telefonvermittlungsanlagen mit Sprachspeichereinrichtungen sind bereits bekannt und werden in der Fachsprache meist als Voicemail-Einrichtungen bezeichnet. Derartige Einrichtungen sind beispielsweise in der EP 0 087 849 und in der EP 0 336 524 sehr ausführlich beschrieben. Ein Verfahren und eine Anordnung zur Abspeicherung von Fernmeldenachrichten in einer Fernmeldenebenstellenanlage ist auch aus der EP 0 304 653 bekannt.

Aufgabe dieser Einrichtungen ist es, daß Teilnehmer, die vorübergehend nicht erreichbar sind, eine fixe Rufumleitung zur Sprachspeichereinrichtung einleiten, bzw. eine Rufumleitung nach einer vorgegebenen Wartezeit eingeleitet wird, wenn sich der Teilnehmer nicht meldet.

Wird nun zu einer Sprachspeichereinrichtung umgeleitet und diese meldet sich, so wird von der Telefonanlage die Nummer des gerufenen Teilnehmers mit DTMF-(Zweiton-Mehrfrequenz-) -Signalen signalisiert, wodurch der rufende Teilnehmer automatisch mit der persönlichen Mailbox des gerufenen Teilnehmers verbunden wird und nun seine Nachricht aufsprechen kann.

Vermittlungsanlagen mit Rufumleitung sind seit langem bekannt. In diesen Anlagen werden nach Beendigung der Sprechverbindung alle Einrichtungen wieder in den Ausgangszustand zurückgesetzt. Hat nun der gerufene Teilnehmer die Rufumleitung zur Sprachspeichereinrichtung nicht aktiviert, so wird bei einem neuerlichen Anruf die Rufumleitung erst wieder nach Ablauf der vorgegebenen Wartezeit aktiviert.

Die bekannten Einrichtungen haben also den Nachteil, daß bei nicht sprechbereitem Teilnehmer jeder neue Ruf zunächst an die Teilnehmerstation gelangt und daß erst dann an die Sprachspeichereinrichtung weiterverbunden wird, wenn innerhalb einer vorbestimmten Zeit der Teilnehmerapparat nicht abgehoben wird. Dies wird von gleichzeitig im Raum befindlichen anderen Personen meist als störend empfunden. Außerdem verstreicht die vor der Weiterschaltung vorgegebene Zeitspanne ungenützt.

Es ist Aufgabe der vorliegenden Erfindung, diesen Nachteil zu beseitigen, insbesondere die Wartezeit bis zum Zugriff zur Sprachspeichereinrichtung möglichst kurz zu halten.

Die Erfindung löst diese Aufgabe dadurch, daß die Steuereinrichtung Schaltmittel enthält, die nach einer einmal erfolgten zeitabhängigen Umschaltung des gerufenen Teilnehmers zur Sprachspeichereinrichtung alle weiteren Anrufe für den gerufenen Teilnehmer sofort zur Sprachspeichereinrichtung umleiten. Die Vermittlungseinrichtung erkennt also, daß der gerufene Teilnehmer nicht sprechbereit ist und schaltet alle weiteren ankommenden Rufe zur Sprachspeichereinrichtung.

Eine Weiterbildung der Erfindung sieht vor, daß die Schaltmittel nach erfolgtem Aktivierungsvorgang am gerufenen Teilnehmerapparat, beispielsweise durch Abheben der Sprechgarnitur, alle weiteren für den gerufenen Teilnehmer ankommenden Rufe wieder mit dessen Teilnehmerapparat verbinden.

Eine weitere Ausgestaltung der Erfindung sieht vor, daß die Schaltmittel erst nach erfolgter Abfrageaufforderung durch den gerufenen Teilnehmer alle weiteren für den gerufenen Teilnehmer ankommenden Rufe wieder mit dessen Teilnehmerapparat verbinden. Durch diese Maßnahme wird vermieden, daß die Umschaltung zum gerufenen Teilnehmer auch dann schon erfolgt, wenn dessen Teilnehmerapparat von einer dritten Person benützt wurde bzw. wenn der gerufene Teilnehmer zwar abgehende Rufe tätigt, jedoch für ankommende Rufe nicht sprechbereit ist.

Die Erfindung wird nun anhand eines in der Fig. dargestellten Ausführungsbeispiels näher beschrieben.

An die Fernsprechvermittlungseinrichtung 1 sind über die Pforten a...z Teilnehmerendeinrichtungen angeschlossen. Im vorliegenden Beispiel sind die Pforten a...w für den Anschluß von Telefonapparaten vorgesehen und die Pforten x,y,z sind für den Anschluß einer Sprachspeichereinrichtung vorgesehen.

Die Vermittlungseinrichtung 1 enthält ein Koppelfeld 4 über das in bekannter Weise die Endeinrichtungen 2,3,7 miteinander verbunden werden, und das von einer Steuereinrichtung 5 gesteuert wird.

Der Teilnehmer 2 ruft nun beispielsweise den Teilnehmer 3, wodurch in der Steuereinrichtung 5 ein Steuerprozess 10 gestartet wird, der zur Steuerung nur dieses Rufes zur Verfügung steht. Es existiert also pro Gespräch jeweils ein Steuerprozess 10, der imstande ist, eine Rufumleitung nach Zeitablauf durchzuführen. Die Steuereinrichtung 5 enthält auch einen zweiten Steuerprozess 11, der eine vom Teilnehmer 3 durch Betätigung einer Umleitungstaste vorprogrammierte unmittelbare Rufumleitung durchführt. Ein dritter Steuerprozess 12 teilt dem gerufenen Teilnehmer 3 nach den im folgenden beschriebenen Kriterien entweder einen ersten oder einen zweiten Steuerprozess zu.

Ist also Teilnehmer 3 zum Zeitpunkt eines Anrufes nicht sprechbereit und hat er die Rufumleitung zur Sprachspeichereinrichtung nicht aktiviert, so wird der Ruf nach Ablauf einer vorgegebenen Rufzeit durch den Steuerprozess 10 zur Sprachspeichereinrichtung 7 umgeleitet.

Ist nun der Ruf des Teilnehmers 2 zur Sprachspeichereinrichtung 7 umgeleitet und ist eine Pforte frei und meldet sich die Sprachspeichereinrichtung 7, so wird der Sprachspeichereinrichtung 7 über ein DTMF-Register 6, das durch den Steuerprozess 10 belegt wird, die Nummer des Teilnehmers 3 mit DTMF-Signalen gesendet. Der Teilnehmer 2 wird mit der persönlichen Mailbox 9 des Teilnehmers 3 in der Sprachspeichereinrichtung 7 verbunden und kann nun Nachrichten aufsprechen.

Dieser Vorgang wird in der Regel durch Auflegen des Teilnehmers 2 beendet. Beim Teilnehmerapparat 3 wird über eine LED oder durch ein Display 8 angezeigt, daß Nachrichten in der Sprachspeichereinrichtung 7 warten.

Das DTMF-Register 11 wird sofort, nachdem die Nummer des Teilnehmers 3 zur Sprachspeichereinrichtung 7 gesendet wurde, vom Steuerprozess 10 wieder freigegeben.

Teilnehmer 2 legt nun auf und beendet damit das Gespräch. Im Steuerprozess 12 wird daraufhin die zeitabhängige Umleitung in eine unmittelbare Umleitung des Teilnehmers 3 zur Sprachspeichereinrichtung 7 umprogrammiert sodaß bei einem weiteren Anruf des Teilnehmers 3 ein zweiter Steuerprozess 11 gestartet wird, der die sofortige Umleitung zur Sprachspeichereinrichtung durchführt. Diese Programmeinstellung bleibt solange aktiv und jeder weitere ankommende Ruf wird automatisch an die Sprachspeichereinrichtung weitergegeben bis der Teilnehmer 3 seine Sprechgarnitur abhebt und damit zu erkennen gibt, daß er wieder sprechbereit ist. Dann wird im Steuerprozess 12 die permanente Umleitung wieder in eine Umleitung nach Zeitablauf umgestellt. Dies kann nach einer bevorzugten Ausbildung der vorliegenden Erfindung auch erst nach erfolgter Abfrageaufforderung des gerufenen Teilnehmers 3 erfolgen. Auf diese Weise wird verhindert, daß die Deaktivierung durch eine dritte Person, die den Apparat des Teilnehmers 3 benützt, erfolgt.

Es wird darauf hingewiesen, daß obige Figurenbeschreibung nur ein Ausführungsbeispiel der Erfindung zeigt, in dem die Steuerprozesse 10, 11 und 12 zum besseren Verständnis als getrennte Prozesse dargestellt sind. In der Praxis sind diese Steuerprozesse in einem einzigen Prozess integriert, der die erstmalige, zeitabhängige Rufumleitung durchführt und alle weiteren Rufe sofort umleitet.

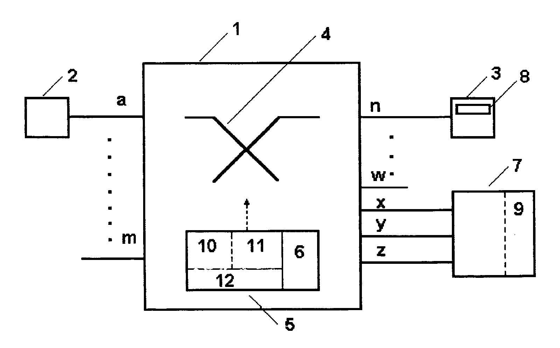

## Patentansprüche

1. Fernsprechvermittlungsanlage (1) mit einer Sprachspeichereinrichtung (7), die bei einem Rufvorgang durch den rufenden Teilnehmer (2) und bei Nichtabheben des gerufenen Teilnehmers (3) nach einer vorgegebenen Zeit mit dem rufenden Teilnehmer (2) verbunden wird, wobei die Fernsprechvermittlungsanlage (1) von einer Steuereinrichtung (5) gesteuert wird, die Steuerprozesse (10,11) zur Rufumleitung sowie zur Ansteuerung der gewünschten Mailbox (9) in der Sprachspeichereinrichtung (7) enthält und wobei die Sprachspeichereinrichtung (7) imstande ist, vom rufenden Teilnehmer (2) eintreffende und für den gerufenen Teilnehmer (3) bestimmte Sprachnachrichten zu speichern und nach Aufforderung durch den gerufenen Teilnehmer an diesen abzusenden, **dadurch gekennzeichnet**, daß die Steuereinrichtung(5) Schaltmittel (12) enthält, die nach einer einmal erfolgten zeitabhängigen Rufumleitung des gerufenen Teilnehmers (3) auf die Sprachspeichereinrichtung (7), alle weiteren Anrufe für den gerufenen Teilnehmer (3) sofort zur Sprachspeichereinrichtung (7) umleiten.

2. Fernsprechvermittlungsanlage nach Anspruch 1, **dadurch gekennzeichnet,** daß die Schaltmittel (12) nach erfolgtem Aktivierungsvorgang am gerufenen Teilnehmerapparat (3), beispielsweise durch Abheben der Sprechgarnitur, alle weiteren für den gerufenen Teilnehmer (3) ankommenden Rufe wieder mit dessen Teilnehmerapparat verbinden.

3. Fernsprechvermittlungsanlage nach Anspruch 1, **dadurch gekennzeichnet**, daß die Schaltmittel (12) nach erfolgter Abfrageaufforderung durch den gerufenen Teilnehmer (3) alle weiteren für den gerufenen Teilnehmer (3) ankommenden Rufe wieder mit dessen Teilnehmerapparat verbinden.

4. Verfahren zur Abspeicherung von Sprachnachrichten in einer Fernsprechvermittlungsanlage (1) mit einer Sprachspeichereinrichtung (7), die bei einem Rufvorgang durch den rufenden Teilnehmer (2) und bei Nichtabheben des gerufenen Teilnehmers (3) nach einer vorgegebenen Zeit mit dem rufenden Teilnehmer (2) verbunden wird, wobei die Sprachspeichereinrichtung (7) imstande ist, vom rufenden Teilnehmer (2) eintreffende und für den gerufenen Teilnehmer (3) bestimmte Sprachnachrichten zu speichern und nach Aufforderung durch den gerufenen Teilnehmer an diesen abzusenden, **dadurch gekennzeichnet**, daß nach einer einmal erfolgten zeitabhängigen Umleitung des gerufenen Teilnehmers (3) auf die Sprachspeichereinrichtung (7) alle weiteren Anrufe für den gerufenen Teilnehmer (3) unmittelbar zur Sprachspeichereinrichtung (7) umgeleitet werden.

5. Verfahren nach Anspruch 4, **dadurch gekennzeichnet**, daß nach erfolgtem Aktivierungsvorgang am gerufenen Teilnehmerapparat (3), beispielsweise durch Abheben der Sprechgarnitur, alle weiteren für den gerufenen Teilnehmer (3) ankommenden Rufe wieder mit dessen Teilnehmerapparat verbunden werden.

6. Verfahren nach Anspruch 4, **dadurch gekennzeichnet**, daß nach erfolgter Abfrageaufforderung durch den gerufenen Teilnehmer (3) alle weiteren für den gerufenen Teilnehmer (3) ankommenden Rufe wieder mit dessen Teilnehmerapparat verbunden werden.
